# EUROPEAN PATENT SPECIFICATION

(11) **EP 3 097 337 B1**
(45) Date of publication and mention of the grant of the patent: **28.11.2018**
(21) Application number: 15750834.2
(22) Date of filing: 21.01.2015
(51) Int. Cl.: F16L 55/17

(54) **PROCEDURE AND FLEXIBLE PIPING MADE FROM HEAT SHRINK MATERIALS FOR CAPTURING FLUID LEAKS FROM DAMAGED PIPES**
VERFAHREN UND FLEXIBLE ROHRLEITUNG AUS WÄRMESCHRUMPFBAREN MATERIALIEN ZUM AUFFANGEN VON FLUIDEN AUS SCHADHAFTEN ROHREN
PROCÉDURE ET CONDUITE FLEXIBLE COMPOSÉE DE MATÉRIAUX THERMORÉTRACTABLES POUR CAPTURE DE FUITES DE FLUIDE PROVENANT DE TUYAUX ENDOMMAGÉS

(30) Priority: 21.01.2014 RO 201400063
(43) Date of publication of application: 30.11.2016
(73) Proprietor: Vlad, Marian Gabriel, Mun. Galati (RO)
(72) Inventor: Vlad, Marian Gabriel, Mun. Galati (RO)
(74) Representative: Turcanu, Costin Radu
(86) International application number: PCT/RO2015/000001
(87) International publication number: WO 2015/171009

(56) References cited:
- CH-A5- 666 108
- KR-A- 20060 089 194
- US-A- 4 853 165
- US-A- 5 940 952

## Description

The invention refers to a procedure for capturing accidental pressurized fluid leaks, resulting from pipes which transport these products, in case of their rupture due to various causes, and also to a corresponding leak-proof and flexible piping, used in order to stop the uncontrolled leakage in the environment of the respective fluids, limiting pollution effects and losses.

There are known some procedures and mechanisms for the control and capturing of accidental oil leaks, which involve the freezing of the affected pipe section (patent GB 1601462, CH 666 108 A5, US patent 4, 396, 031 , US patent 4, 203, 472).

There are known a procedure and a mechanism for the prevention of pipe leaks, in document GB1601462. The known procedure consists in the application of a cooling agent on the damaged section of the pipe, using a collar mounted around the pipe.

It is also known the document CH 666 108 A5 which describes a repair cuff designed to coat a cable having damaged insulation by using shrinkable material and a zipper system.
This invention is designed to be applied as a protection layer around a cable or around a pipe with continuous body.
The major disadvantage is given by the fact that the repair cuff is not provided with gas tight and liquid tight zippers, therefore it can not fulfill the role of flexible piping system through which pressurized captured fluids can be contained and transported. It is not usable as stand-alone piping solution, not having liquid tight and gas tight zippers.
The sealing of the repair cuff zipper is possible only by the sliding and pressing the sealing underlay between the cuff closure and the body of the cable/tube being covered, therefore repair cuff can not be used as independent piping system to capture underpressure fluids from ruptured pipes with discontinuous body.
Another major disadvantage is that repair cuff is not provided with incorporated electrical resistances to allow the remote control of the shrinking process using the remote activation and command with electric power, therefore, the underwater process of shrinkage can not be fulfilled in a simple way.

It is also known the document US 4203472 A which describes a mechanism and a procedure for stopping leaks, which consist in the application of a cooling agent on the damaged section of the pipe, using a mechanism provided with radial pipes.

It is also known the document WO 2009100450 A1 which describes a method for preventing pipe leaks through "bandaging" the damaged section.

It is also known the document JP 2001056086 A which describes a leakage prevention piping from a pipe made up of a textile coating secured around the pipe using a zipper.

A known procedure and a mechanism for capturing accidental pipe leaks are shown in the Romanian patent no. 127040. Their disadvantage is that belts of adequate width should be manufactured or prepared, in order to generate a precise diameter, customized to match with the diameter of the damaged pipe and. Therefore, if the damaged section of the pipe has different diameters, the securing and sealing of the system becomes much more complicated.

In contrast with all the above indicated inventions, my invention as per PCT/RO2015/000001 it can be used succesfully to build up an emergency piping system, even where, following an accident, a piece of the damaged pipe is missing, generating a discontinuous body of the piping system, with non regular shape.
In contrast with all the above indicated inventions, my invention it has the capacity to retain and to transport the fluids inside of the system after the shrinkage induced by the incorporated electric heating resistances, combined with closing the liquid & gas tight zippers.
Another advantage of the use of incorporated electric resistances, is the possibility of the remote activation and control of the shrinking process, for rapid subsea deployment, by aplying electric power, working with remotely operated underwater vehicles (ROV).

The purpose of this invention is the improving of the procedure and piping for capturing fluid leaks from ruptured pipes, when the section of the damaged pipe where the piping is assembled shows level differences, bendings, bondings, flanges, valves etc.

The flexible piping for catching accidental fluid leaks is assembled together through interconnection, around the ruptured pipe in which there is pressurized fluid, and is made up of a number n ≥ 1 of rubber or composite material bands, designed with at least one heat shrinkable area, provided with liquid tight and gas tight zipper (already known) on both longitudinal edges. The bands are designed with at least one network of electrical resistances on the inside, which may be connected to a power supply using terminals (water-proof connector, element individually known).

The bands may have different lengths or widths, and may be connected with other bands through the connection of the liquid tight and gas tight zipper, depending on the size of the pipe and its flaw. Through the connection of the liquid tight and gas tight zipper the bands are provided with, it is obtained a flexible piping which can coat a pipe with a certain diameter even under the conditions of level differences, bendings, bondings, flanges, valves, etc. Next, through heat shrinking, the piping will mould on the elements of the ruptured pipe and collars will be provided at the ends in order to ensure tightness.

In order to start the piping heat shrinking process, heating through electric voltage will be applied at the terminals of the resistance system.

The procedure and flexible piping for capturing accidental leaks, according to this invention, have the following advantages:
It is appropriate as a fast intervention solution for rapid deployment for capture uncontrolled discharges from ruptured pipes and for guiding the captured fluids towards a desired area or toward a storage tank, due to the fact that it does not need to build personalised systems, exactly fitted on the diameter or the shape of the damaged pipe, thus reducing the time of action, using combination of bands provided with liquid tight and gas tight zipper system on the lateral edges and designed with at least one area of heat shrinkable material provided with incorporated electric resistances for heating material with adequate width, which are necessary in order to generate exactly a certain diameter by, in contrast with the other existing solutions which require to prepare and manufacture personalized devices, with personalized shape and dimensions.

The procedure may also be applied for interventions to ruptured submarine pipes because the bands may be assembled both manually and using a ROV (Remote Operated Vehicle), and they may be provided with handling eyelests. The storage systems for fluids and subsea boosting pump stations are widely used nowadays, the connection and disconnection procedure of these equipment are representing basic operations, being made remotely, without the necesity of manual operations or inventive skills.

The intervention time is also reduced due to the fact that the mechanic removal of elements with different levels (flanges, valves, reductions etc.), operation that is difficult and costly in such situations, is no longer necessary, due to a piping with an adjustable diameter, and due to the shrink ratio of at least 3:1 of the heat shrink material used for the flexible piping.

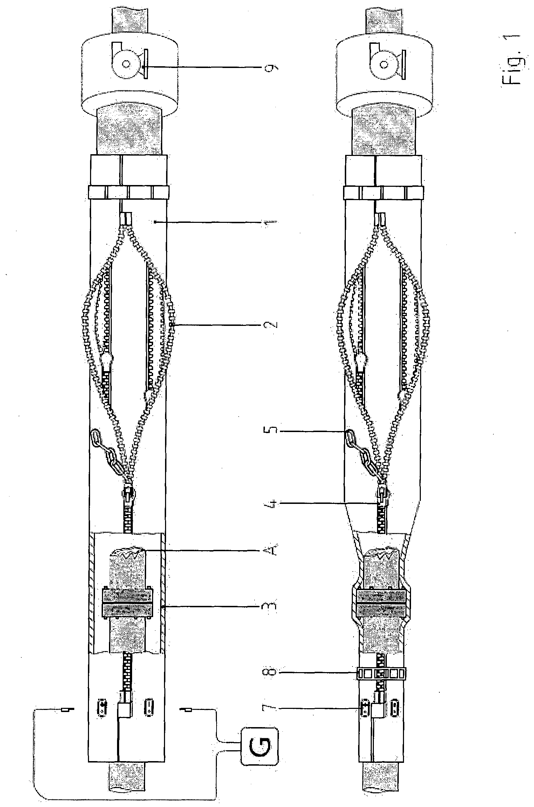

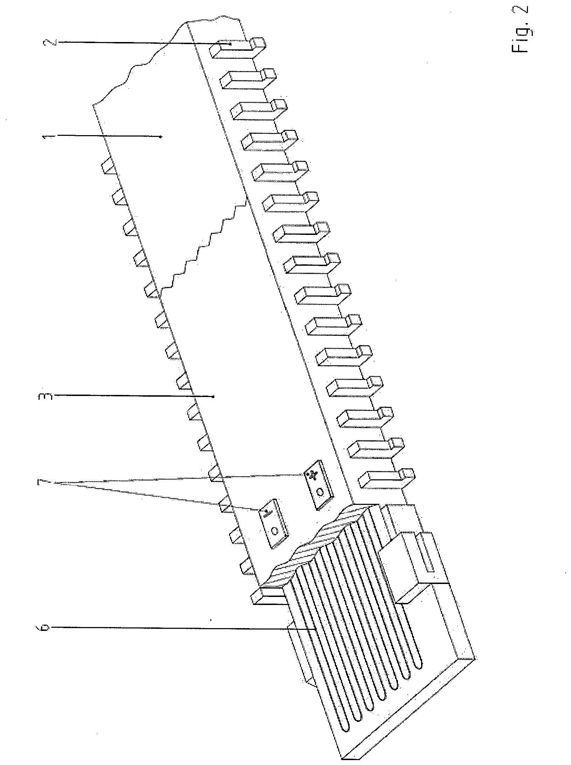

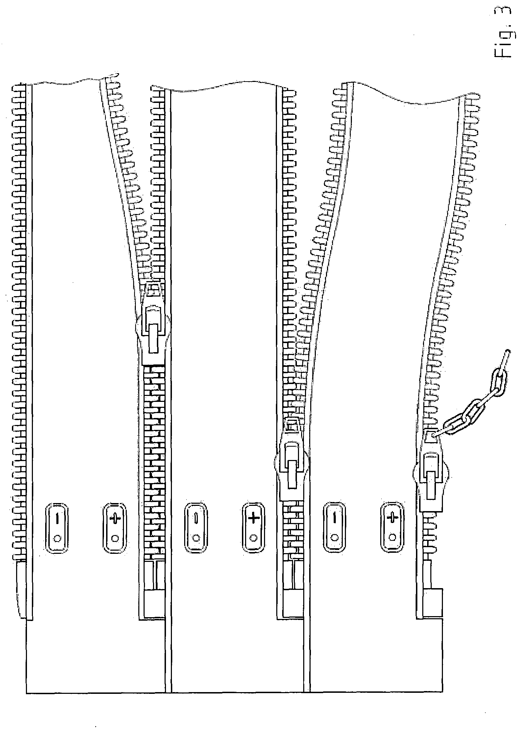

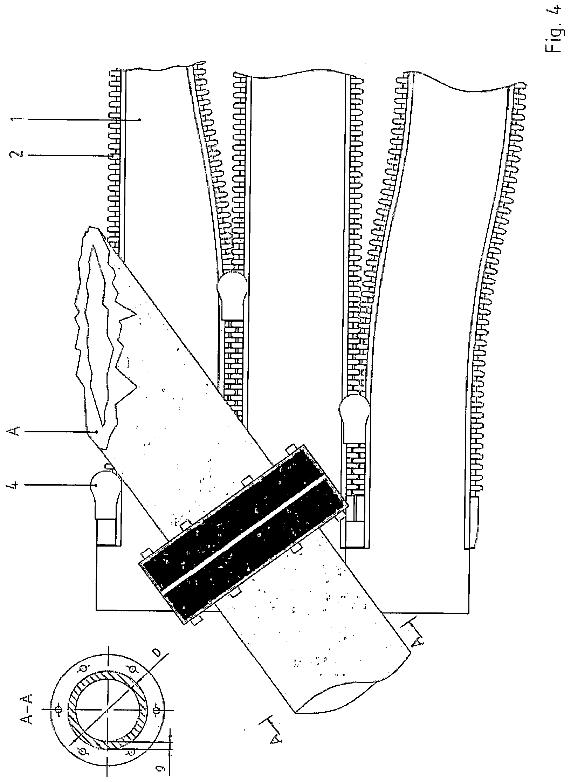

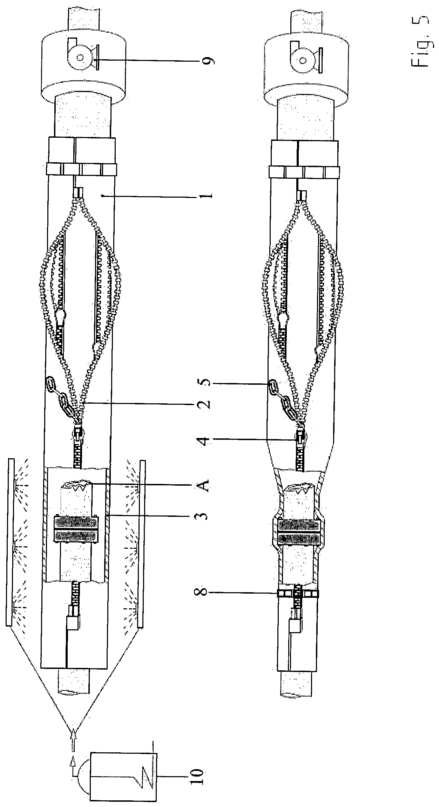

An example of the invention is presented below, regarding figures 1-5, which represent:
fig. 1 , view of a flexible piping applied over a damaged pipe, in the incipient phase of zipper closing, with the opposite end of the flexible piping already connected to a pipe network through standard connection element and to an optional boosting pump, in the initial state and after the heat shrinking of the bands.
fig. 2, view of a flexible band having a section made from heat shrink material in which the heating resistance is provided with connection terminals, having a liquid tight and gas tight zipper system on the lateral edges;
fig. 3, view of a system made up of multiple bands, interconnected through the closing with liquid tight and gas tight zipper, in various stages;
fig. 4, view of a flexible piping, prepared for its application over a damaged pipe, in which the initial diameter of the piping obtained through the closing of the liquid tight and gas tight zipper corresponds with the dimensions of possible level differences from the damaged pipe (flanges etc.)
fig. 5, view of a flexible piping applied over a damaged pipe, on which heating is applied through an external spray of hot air/steam as an alternative, or as a backup solution for shrinking, not falling within the scope of the invention.

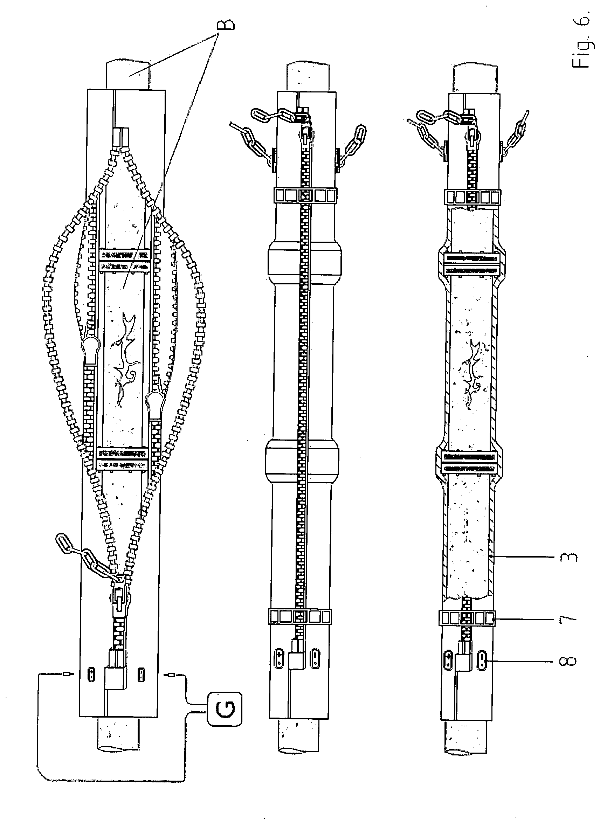

fig. 6, view of a flexible piping, when it is closed on the body of a pipe which is longitudinally cracked (non-broken pipe), in its initial state and after the heat shrinking of the bands.

The procedure for capturing accidental under pressure fluid leaks, according to the invention, consists in generating a flexible piping, around the damaged pipe A, in which there is an under pressure fluid. The flexible piping is generated by assembling together through interconnection a number of bands 1, which are provided with liquid tight and gas tight zipper teeth 2 on both longitudinal edges. The bands are made of rubber or composite materials and are provided with at least one heat shrink area 3, the known material having a shrink ratio of 3:1 or a different one, which has the shrinking temperature of approximately 105°C -150°C The shrinking only takes place transversally. Bands 1 are framed together, using liquid tight and gas tight zipper locks 4, whose movement is performed through normal hauling, of certain flexible elements 5, made of cable or chain, which may be driven independently or simultaneously; in the latter case they may be connected using a normal connection system.
In an example, the bands are designed with at least one network of electrical resistances 6 on the inside, which may be connected to a power supply using terminals 7. Through the connection of the liquid tight and gas tight zippers the bands are provided with, it is obtained a piping which can be assembled as a continuation of a ruptured pipe with a certain diameter even under the conditions of level differences, bendings, bondings, flanges, valves etc.
Thus, its dimensions are automatically adapted through heat shrinking, so the piping will mould on the elements of the damaged pipe. The application of temperature in order to initiate the heat shrink process through electric voltage at the terminals of the resistance system will be made when the liquid tight and gas tight zippers are just partially closed, in order to avoid generating stress in the system. Subsequently heat shrinking and securing with collars 8, the liquid tight and gas tight zippers closing will continue until the complete sealing of the generated system. Additional collars will also be used, so that the captured fluid will be guided towards the opposite end of the flexible piping system provided with zippers,and will be directed towards the desired area.

The heat shrinking of the material the bands are manufactured from is ensured through the application of a voltage at the terminals of the electric resistances of the bands, generating their heating up to the temperature of 105°C -150°C, when the transversal shrinking of the bands and, implicitly, of the piping made up of these bands will take place.

As an alternative, or as a backup solution not falling within the scope of the invention, a spray of steam or hot air may be applied from a steam generator 10, or heat generated from a different source, in order to heat the bands material at temperatures between 105°C - 150°C in order to trigger or complete the heat shrink process. The time needed for applying a temperature of 105°C -150°C necessary for heat shrinking is only a few minutes.

Drainage is generated through the gradual closing of the liquid tight and gas tight zippers and the gradual guiding of the captured fluid towards the opposite end of the flexible piping, which is already connected to a pipe network through standard connection elements (already known), and further directed towards the desired area, or to a storage system. Optional, a boosting pump 9 (known element) can be attached, in order to create a depressurisation in the flexible piping system.

## Claims

1. Flexible piping for capturing accidental under pressure fluid leaks, resulting from pipes which transport these products, in case of pipes rupture, due to various causes, made from a number n ≥ 1 of longitudinal bands (1) from composite materials comprising zipper locks (4) and flexible elements (5) made from cable or chain, the bands being assembleable together through interconnection using the zipper locks (4) around the damaged pipe (A) and being closeable using the towage of the flexible elements (5) made from cable or chain, **characterised by** the fact that the bands (1) are provided with liquid tight and gas tight zipper teeth (2) on both longitudinal edges of the bands, and provided with at least one area (3) of heat shrinkable material provided with incorporated electric resistances (6) for heating.

2. A procedure for capturing accidental leaks of under pressure fluid resulting from pipes which transport these products, in case of their rupture due to various causes, by use of the flexible piping of claim 1 and redirecting the products flow towards a desired area or to a storage system optionally provided with a boosting pump (9) in order to create a depressurisation in the flexible piping system, **characterised in that** it comprises the steps of:
- assembling together through interconnection and wraping around the ruptured pipe (A) containing pressurized fluid, of one end of the interconnected shrinkable bands (1) provided with liquid tight and gas tight zipper teeth (2) on both longitudinal edges, and made from composite materials, which have at least one heat shrinkable area provided with incorporated electrical resistances (6), the bands being interconnected using liquid tight and gas tight zipper locks (4) provided with towing mechanical means of flexible elements (5) made of cable or chain.
- shrinking the flexible piping made of interconnected bands, molding on the respective ruptured pipe using the electrical heating of the incorporated resistances (6), ensuring the sealing of the ruptured pipe regardless of its variable dimensions, together with applied collars (8), leading the fluid flow towards the opposite end of the flexible piping, already connected to a pipe network through standard connection elements.
- building a flexible piping made of shrinkable bands by gradually closing the liquid tight and gas tight zippers, towing the zipper locks (4) independently or simultaneously.

## Patentansprüche

1. Flexibles Rohr zum Bergen unfallbedingt freigesetzter unter Druck stehender Fluide, die, im Falle eines Rohrbruchs unterschiedlichen Ursprungs, von den diese Fluide transportierenden Leitungen stammen, hergestellt aus einer Anzahl n > 1 lang gestreckter Bänder (1) aus Verbundmaterialien umfassend Reißverschlüsse (4) und aus Kabel oder Kette hergestellte flexible Elemente (5), wobei die Bänder mit Hilfe der Reißverschlüsse (4) durch Verkettung miteinander um das beschädigte Rohr (A) herum zusammengefügt werden können und unter Zugwirkung der aus Kabel oder Kette gefertigten elastischen Elemente (5) geschlossen werden können, **dadurch gekennzeichnet, dass** die Bänder (1) mit flüssigkeits- und gasdichten Reißverschlusszähnen (2) an beiden Längsrändern der Bänder und mit wenigstens einem Flächenbereich (3) aus Wärmeschrumpfmaterial versehen sind, der mit eingebauten elektrischen Widerständen (6) zur Beheizung ausgerüstet ist.

2. Verfahren zum Bergen unfallbedingt freigesetzter unter Druck stehender Fluide, die, im Falle eines Rohrbruchs unterschiedlichen Ursprungs, von den diese Fluide transportierenden Leitungen stammen, unter Verwendung des flexiblen Rohres nach Anspruch 1 und Umlenkung des Produktflusses in Richtung eines gewünschten Bereichs oder zu einem gegebenenfalls mit einer Druckerhöhungspumpe (9) zur Erzeugung eines Minderdrucks im flexiblen Rohrsystem ausgerüsteten Speichersystem, **dadurch gekennzeichnet, dass** es folgende Schritte umfasst:
• Zusammenfügen durch Verkettung miteinander und Wickeln um das unter Druck stehende Fluid enthaltende gebrochene Rohr (A), des einen Endes der miteinender verketteten Schrumpfbänder (1) die mit flüssigkeits- und gasdichten Reißverschlusszähnen (2) an beiden Längsrändern versehen und aus Verbundstoffen gefertigt sind und wenigstens einen Wärmeschrumpfbereich besitzen, der mit eingebauten elektrischen Widerständen (6) ausgerüstet ist, wobei die Bänder unter Verwendung flüssigkeits- und gasdichter Reißverschlüsse (4) verkettet sind, welche mit mechanischen Zugmitteln für die aus Kabel oder Kette gefertigten flexiblen Elemente (5) versehen sind.
• Schrumpfen des aus den verketteten Bändern gefertigten flexiblen Rohres mit formgerechtem Anpassen über das jeweilige gebrochene Rohr unter Verwendung der eingebauten Widerstände (6), Sichern der Abdichtung des gebrochenen Rohres unabhängig von dessen variabler Größe, einschließlich der angebrachten Schellen (8), wobei der Fluidstrom zum anderen Ende des schon über stadardisierte Verbindungselemente mit einem Rohrnetzwerk verbundenen flexiblen Rohres gelenkt wird.
• Erzeugen eines flexiblen Rohres bestehend aus Schrumpfbändern durch das allmähliche Schließen der flüssigkeits- und gasdichten Reißverschlussverbindungen durch unabhängige oder gleichzeitige Zugeinwirkung auf deren Schieber (4).

## Revendications

1. Conduite flexibles pour la capture de fuites accidentelles de fluides sous pression, résultant dans de conduites transportant ces produits, en cas de rupture de tuyaux due à diverses causes, à partir d'un nombre n ≥ 1 de bandes longitudinales (**1**), en matériaux composites, comportant des fermetures à glissière (**4**) et des éléments flexibles (**5**) en câble ou en chaîne, les bandes pouvant être assemblées par interconnexion en utilisant les fermetures à glissière (**4**) autour du tuyau endommagé (**A**) et pouvant être fermées par le remorquage des éléments flexibles (**5**) à partir d'un câble ou d'une chaîne, **caractérisé par le fait que** les bandes (**1**) sont pourvues de dents (**2**) de fermeture à glissière étanches aux **liquides** et aux gaz sur les deux bords longitudinaux des bandes et dotées d'au moins une zone (**3**) de matériau thermorétractable pourvu de résistances électriques incorporées (**6**) pour le chauffage.

2. Une procédure pour capture de fuites accidentelle de fluide sous pression résultant de conduites qui transportent ces produits, en cas de rupture due à des causes diverses, en utilisant la tuyauterie souple selon la revendication 1 et en réorientant le flux vers une zone souhaitée ou système de stockage éventuellement muni d'une pompe d'appoint (9) afin de créer une dépressurisation dans le système de tuyauterie flexible, **caractérisé en ce qu'**il comprend l'étape consistant à:
- assembler par interconnexion et envelopper autour du tuyau rompu (**A**) contenant le fluide sous pression, une extrémité des bandes rétractables interconnectées (**1**) munies de dents de fermeture (**2**) étanches aux **liquides** et aux gaz sur les deux bords longitudinaux et en matériaux composites , comportant au moins une zone thermorétractable munie de résistances électriques incorporées (**6)**, les bandes étant interconnectées au moyen de fermetures à glissière (**4**) étanches aux liquides et aux gaz pourvues de moyens mécaniques de remorquage d'éléments flexibles (**5**) en câble ou en chaîne;
- rétrécissement de la tuyauterie flexible constituée de bandes interconnectées, moulage sur le tuyau rompu respectif en utilisant le chauffage électrique des résistances incorporées (**6**), assurant l'étanchéité du tuyau rompu quelles que soient ses dimensions variables, ainsi que les collets appliqués (**8**) le fluide s'écoule vers l'extrémité opposée de la tuyauterie flexible, déjà connectée à un réseau de conduites par des éléments de connexion standard;
- construire une tuyauterie flexible constituée de bandes rétractables en fermant progressivement les fermetures à glissière étanches aux liquides et aux gaz, en remorquant les fermetures à glissière (**4**) indépendamment ou simultanément.
